# EUROPEAN PATENT SPECIFICATION

(11) **EP 1 898 575 B1**
(45) Date of publication and mention of the grant of the patent: **11.01.2017**
(21) Application number: 07253503.2
(22) Date of filing: 04.09.2007
(51) Int. Cl.: H04W 24/02

(54) **Microwave wireless communication system**
Drahtloses Mikrowellen-Kommunikationssystem
Système de communication sans fil à micro-onde

(30) Priority: 06.09.2006 JP 2006241516
(43) Date of publication of application: 12.03.2008
(73) Proprietor: NEC Corporation, Minato-ku Tokyo 108-8001 (JP)
(72) Inventor: Ito, Yoshio, Minato-ku Tokyo 108-8001 (JP)
(74) Representative: Reeve, Nicholas Edward

(56) References cited:
- WO-A-00/56100
- WO-A-92/21182

## Description

### BACKGROUND

### TECHNICAL FIELD

The present invention relates to a microwave wireless communication system, and more particularly to a microwave wireless communication system, a microwave communication network monitoring equipment, and a network monitoring program, which allow upgrading a microwave wireless communication equipment of a predetermined section of a microwave communication network.

### RELATED ART

Microwave wireless communication systems so far developed include the one disclosed in Japanese Laid-open patent publication No. 2005-347982. The wireless communication system according to this document is capable of efficiently monitoring and controlling, by a top master station, a plurality of microwave wireless communication equipments provided thereunder. Also, in a system configured with these known microwave wireless communication equipments, generally a monitor and control equipment that monitors and controls the respective wireless equipments is connected to the master station, to thereby monitor and control the plurality of microwave wireless communication equipments provided under the master station.

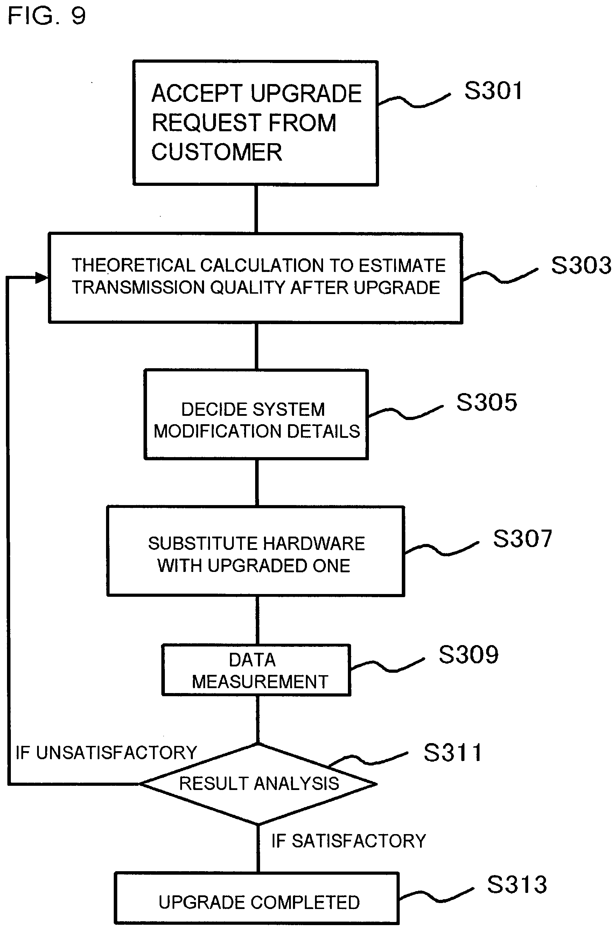

Before describing the present invention, the related art will be explained in detail with reference to Fig. 9 in order to facilitate the understanding of the present invention.

As shown in Fig. 9, when the known microwave wireless communication system is to be upgraded, firstly an upgrade request from a customer is accepted (step S301), and a theoretical calculation is performed to estimate the transmission quality to be attained after the upgrading (step S303). Then actual detail of modification of the system is decided, according to the calculation result (step S305). According to the decision, the upgraded equipment is substituted (step S307). Then the system is activated, to thereby collect monitored data and measure the transmission quality (step S309). The measurement result is then analyzed (step S311), and if the result proves unsatisfactory the process returns to the step S303 so as to repeat the steps S303 to S309, until the expected transmission quality is attained. If the analysis result proves satisfactory, the upgrading is completed (step S313).

The technique according to the foregoing document, however, has room for improvement in the following aspect.

When the system is to be upgraded, the transmission quality after the upgrading can only be estimated through theoretical calculation, and besides the substitution of the system has to be practically performed based on the estimation result. Accordingly, in case an unexpected factor proves to be present on the actual line, the transmission quality often fails to satisfy the specification designated by the customer. Consequently, the transmission quality still has to be measured after actually substituting the system, and the system modification has be to repeatedly executed until the result satisfies the customer's specification.

International Patent Application No. WO00/56100 describes a communication system formed of wireless cells connected to each other via land lines or microwave links. The base stations continually detect and measure parameters, e.g. transmission frequencies, from other cells, and the system reallocates frequencies etc. on the basis of the measured values.

### SUMMARY OF THE INVENTION

An exemplary object of the invention is to provide a microwave wireless communication system that allows securing an adequate transmission quality with precision, when the system is to be upgraded.

The invention in its various aspects is defined in the independent claims below, to which reference may now be made. Advantageous features are set forth in the appendant claims.

In an exemplary aspect of the invention, there is provided a microwave wireless communication system including a plurality of microwave communication equipments linked at one end via wire communication and at the other end via microwave wireless communication; and a network monitoring equipment that monitors and controls a microwave communication network including the plurality of microwave communication equipments. The network monitoring equipment includes an acceptance unit that accepts from an operation unit that is operated by an operator, when a microwave communication equipment of a predetermined section is to be upgraded, modification of a set value for communication control for the microwave communication equipment; an update unit that upgrades the microwave communication equipment according to the modification of the set value for communication control accepted by the acceptance unit; a measurement unit that measures transmission quality of the microwave communication network of said microwave communication equipment that has been upgraded; and a presentation unit that presents the transmission quality measured by the measurement unit.

The transmission quality herein referred to may be measured based on various data, such as a received field characteristic value of each microwave communication equipment or a waveform of the transmitted or received wave.

The microwave wireless communication system thus configured allows tentatively modifying the set value of the microwave communication equipment of a certain section and thereby measuring the transmission quality of the network and checking the result. The system, therefore, enables estimating in advance degradation of the transmission quality originating from the modification of the set value, for example the transmission capacity and the modulation system, and thus performing appropriate system modification based on the estimation. Besides, the set values may be further modified according to the presented result, so that the system may be modified to a higher level.

In the foregoing microwave wireless communication system, the microwave communication equipment includes a wire communication interface unit that makes wire communication with first another microwave communication equipment in the microwave communication network, a wireless communication unit that makes microwave wireless communication with second another microwave communication equipment in the microwave communication network, a set value storage unit that stores therein a variable set value for communication control, a modification acceptance unit that accepts a modification instruction of the set value for communication control from the network monitoring equipment, a modification unit that modifies the set value for communication control in the set value storage unit according to the modification instruction, and a control unit that controls communication according to the set value for communication control in the set value storage unit.

In the foregoing microwave wireless communication system, the network monitoring equipment further includes a first restoration instruction acceptance unit that accepts an instruction to restore the set value for communication control before the modification, and a restoration instruction unit that instructs, once the restoration instruction is accepted, the microwave communication equipment to restore the set value for communication control to the value before the modification, and the microwave communication equipment may further include a backup unit that backs up the set value for communication control in the set value storage unit when the modification acceptance unit accepts the modification instruction, a second restoration instruction acceptance unit that accepts the restoration instruction from the network monitoring equipment, and a restoration unit that restores the set value for communication control backed up by the backup unit in the set value storage unit, when the second restoration instruction acceptance unit accepts the restoration instruction.

Such configuration allows restoring the set value, in a case where the transmission quality proves to exceed a permissible range after the tentative modification, to the value before the modification, thereby restoring the original transmission quality. Thus, work efficiency for upgrading can be improved without the need to replace the hardware such as an antenna, and the cost of such unnecessary hardware can be saved.

In the foregoing microwave wireless communication system, the set value for communication control may include at least one of set value of a transmission capacity and a type of modulation system. Also, the microwave wireless communication system may further include a history accumulation unit that causes the measurement unit of the network monitoring equipment to measure the transmission quality for a predetermined period, and accumulates therein a history of the transmission quality that has been measured, and the presentation unit may further present the history.

Such configuration allows checking the transmission quality of the predetermined period, thereby enabling checking the transmission quality reflecting fluctuation in environment, such as weather or radiowave condition, which leads to higher reliability of the system.

In another exemplary aspect of the invention, there is provided a microwave communication network monitoring equipment that monitors and controls a microwave communication network including a plurality of microwave communication equipments linked at one end via wire communication and at the other end via microwave wireless communication, including: an acceptance means for accepting from an operation unit that is operated by an operator, when a microwave communication equipment of a predetermined section is to be upgraded, modification of a set value for communication control for said microwave communication equipment; an update means for upgrading said microwave communication equipment according to said modification of said set value for communication control accepted by said acceptance means; a measurement means for measuring transmission quality of said microwave communication network of said microwave communication equipment that has been upgraded; and a presentation means for presenting said transmission quality measured by said measurement means; a first restoration instruction acceptance means for accepting an instruction to restore said set value for communication control before said modification; and a restoration instruction means for instructing, once said restoration instruction is accepted, said microwave communication equipment to restore said set value for communication control to said value before said modification.

In another exemplary aspect of the invention, there is provided a microwave communication network monitoring program that monitors and controls a microwave wireless communication network including a plurality of microwave communication equipments linked at one end via wire communication and at the other end via microwave wireless communication, causing a computer at a network monitoring equipment to execute functions including: accepting from an operation unit that is operated by an operator, when a microwave communication equipment of a predetermined section is to be upgraded, modification of a set value for communication control for said microwave communication equipment; upgrading said microwave communication equipment according to said modification of said set value for communication control accepted by said accepting; measuring transmission quality of said microwave communication network that has been upgraded; and presenting said transmission quality measured by said measuring;
the program further causing a computer at a microwave communication equipment to execute functions including: making wire communication with first another microwave communication equipment in said microwave communication network; making microwave wireless communication with second another microwave communication equipment in said microwave communication network; storing in a set value storage means a variable set value for communication control; accepting a modification instruction of said set value for communication control from said network monitoring equipment; modifying said set value for communication control in said set value storage means according to said modification instruction; and controlling communication according to said set value for communication control in said set value storage means;
the program further causing the computer at the network monitoring equipment to execute functions including: accepting an instruction to restore said set value for communication control before said modification; and instructing, once said restoration instruction is accepted, said microwave communication equipment to restore said set value for communication control to said value before said modification;
the program further causing the computer at the microwave communication equipment to execute functions including: backing up said set value for communication control in said set value storage means when said modification instruction is accepted; accepting said restoration instruction from said network monitoring equipment; and restoring said backed-up set value for communication control in said set value storage means, when said restoration instruction is accepted.

It is to be noted that any desired combination of the foregoing constituents, and any conversion of the expressions in the present invention among methods, equipments, systems, recording media, or computer programs is effectively included in the scope of the present invention.

Thus, the present invention provides a microwave wireless communication system that allows securing an adequate transmission quality with precision, when the microwave communication network is to be upgraded.

### BRIEF DESCRIPTION OF THE DRAWINGS

The above and other objects, advantages and features of the present invention will be more apparent from the following description of certain exemplary embodiments taken in conjunction with the accompanying drawings, in which:
Fig. 1 is a block diagram showing a network configuration of a microwave wireless communication system embodying the present invention;
Fig. 2 is a functional block diagram showing a configuration of a microwave communication equipment according to an exemplary embodiment of the present invention;
Fig. 3 is a functional block diagram showing a configuration of a network monitoring equipment according to the exemplary embodiment;
Fig. 4 is an illustration showing an example of a setting screen of the network monitoring equipment according to the exemplary embodiment;
Fig. 5 is a table showing an example of system upgrading of the microwave communication network according to the exemplary embodiment;
Figs. 6A and 6B are illustrations showing examples of a monitor screen of the microwave communication network according to the exemplary embodiment;
Fig. 7 is a flowchart showing an example of an upgrading process of the microwave wireless communication system according to the exemplary embodiment, and operations of the respective equipments during the process;
Figs. 8A and 8B are graphs for explaining an analysis result of the microwave wireless communication system according to the exemplary embodiment; and
Fig. 9 is a flowchart showing an upgrading process of a conventional microwave wireless communication system.

### DETAILED DESCRIPTION

The invention will be now described herein with reference to illustrative embodiments. Those skilled in the art will recognize that many alternative embodiments can be accomplished using the teachings of the present invention and that the invention is not limited to the exemplary embodiments illustrated for explanatory purposes.

Hereunder, an exemplary embodiment of the present invention will be described referring to the accompanying drawings. In all the drawings, same constituents are given the same numerals, and the description thereof will not be repeated.

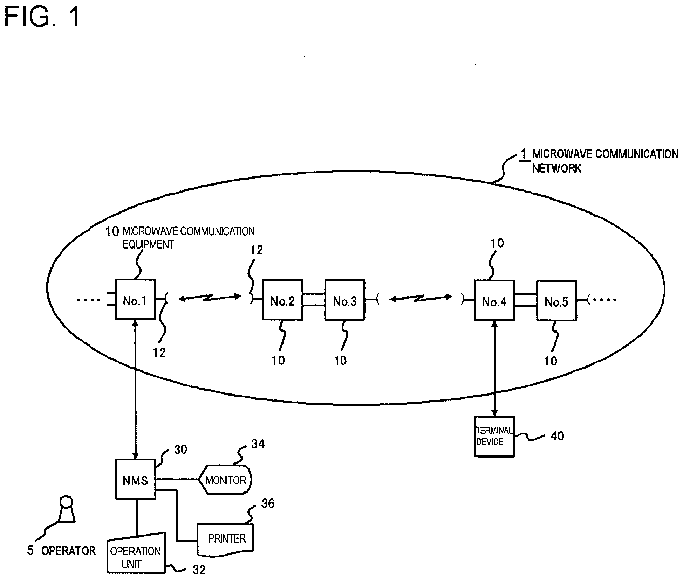

Fig. 1 is a block diagram showing a network configuration of a microwave wireless communication system according to the exemplary embodiment of the present invention. The microwave wireless communication system according to the exemplary embodiment includes a plurality of microwave communication equipments 10, mutually linked via microwave wireless communication to form a microwave communication network 1. The system also includes a network monitoring equipment 30 that monitors and controls the microwave communication network 1, to thereby tentatively modify a set value for communication control for the microwave communication equipment 10 of a predetermined section in the microwave communication network 1 and monitors the transmission performance, when necessary during an upgrading process of the microwave communication network 1.

Each microwave communication equipment 10 is provided with an antenna 12, so as to perform wireless communication with the antenna 12 of the other opposing microwave communication equipment 10. Here, although the microwave communication equipments 10 are serially connected in Fig. 1, another network may be branched from one of the microwave communication equipments 10. Also, in the subsequent drawings, structure of such portions that are not involved with the essence of the present invention is not shown.

The microwave wireless communication system according to the exemplary embodiment includes the plurality of microwave communication equipments 10 linked at an end via wire communication and at the other end via microwave wireless communication, and the network monitoring equipment 30 that monitors and controls the microwave communication network 1 including the plurality of microwave communication equipments, and the network monitoring equipment 30 accepts, when the microwave communication equipment 10 of the predetermined section is to be upgraded, modification of the set value for communication control for the microwave communication equipment 10; upgrades the microwave communication equipment 10 according to the accepted modification of the set value for communication control; measures transmission quality of the upgraded microwave communication network 1; and presents the measured transmission quality.

To be more detailed, the microwave wireless communication system includes the network monitoring equipment (abbreviated as NMS in the drawings) 30 and a terminal device 40. The network monitoring equipment 30 is for example a personal computer, and includes an operation unit 32 that accepts manipulation by an operator 5, a monitor 34 that displays a screen, and a printer 36 that prints. The network monitoring equipment 30 is connected, for example, to the microwave communication equipment 10 marked as No.1 in the microwave communication network 1, to thereby monitor and control the microwave communication equipments 10 in the microwave communication network 1, as well as to execute a program and modification of set value. The microwave communication equipment 10 and the network monitoring equipment 30 may be connected, for example, via a USB(Universal Serial Bus) cable.

Examples of the operation unit 32 include a keyboard, a mouse, a tablet, an operating button, and a touch panel. Examples of the monitor 34 include a light, an LED(Light-Emitting Diode), a CRT(Cathode-Ray Tube) monitor, and an LCD(Liquid Crystal Display).

The terminal device 40 is connected to one of the microwave communication equipments 10 in the microwave communication network 1, to thereby monitor and modify the set value of the connected microwave communication equipment 10. The microwave communication equipment 10 and the terminal device 40 may be connected, for example, via a USB cable. The terminal device 40 is for example a personal computer, details of which are not specifically limited, and is connectible to any of the microwave communication equipment 10 in the microwave communication network 1 via a USB cable or the like. The terminal device 40 may monitor and modify the set value for the connected microwave communication equipment 10 in the microwave communication network 1.

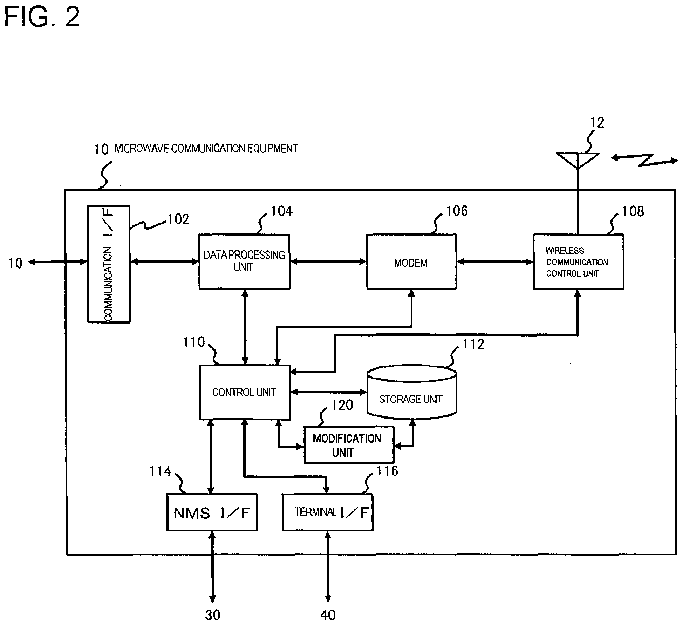

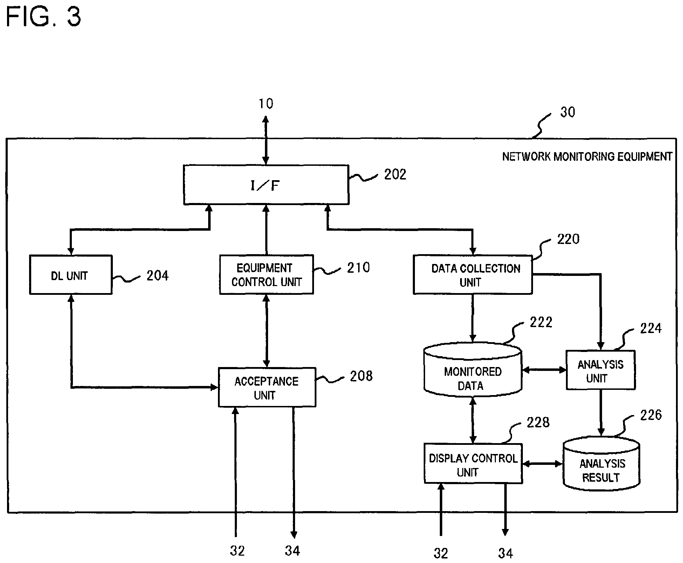

Here, the respective constituents of the microwave communication equipment 10 and the network monitoring equipment 30, which are shown in Figs. 2 and 3, may be materialized by a desired combination of hardware and software, such as a CPU(Central Processing Unit) or memory of a given computer, a program installed in the memory so as to execute the function of the constituents shown therein, a storage unit such as a hard disk that stores such program, and a network connection interface. It is to be understood by those skilled in the art that the materializing process and the equipments are subject to various modifications. The drawings to be referred to in the subsequent passages depict blocks conceived as functional units, rather than hardware units.

Fig. 2 is a functional block diagram showing a configuration of the microwave communication equipment 10. The microwave communication equipment 10 according to the exemplary embodiment includes a wire communication interface unit (communication interface unit 102) that performs wire communication with first another microwave communication equipment 10 in the microwave communication network 1, a wireless communication unit (wireless communication control unit 108 and antenna 12) that performs microwave wireless communication with second another microwave communication equipment 10 in the microwave communication network 1, a set value storage unit (storage unit 112) that stores therein the variable set value for communication control, a modification acceptance unit (NMS interface unit 114 and control unit 110) that accepts a modification instruction of the set value for communication control from the network monitoring equipment 30, a modification unit 120 that modifies the set value for communication control in the set value storage unit (storage unit 112) according to the modification instruction, and a control unit (control unit 110, data processing unit 104, modem 106, and wireless communication control unit 108) that controls the communication according to the set value for communication control in the set value storage unit (storage unit 112).

The microwave communication equipment 10 may further include a backup unit (modification unit 120) that backs up the set value for communication control in the set value storage unit (storage unit 112) when the modification acceptance unit (NMS interface unit 114 and control unit 110) accepts the modification instruction, a second restoration instruction acceptance unit (NMS interface unit 114 and control unit 110) that accepts a restoration instruction from the network monitoring equipment 30, and a restoration unit (modification unit 120) that restores the set value for communication control backed up by the backup unit in the set value storage unit, when the second restoration instruction acceptance unit accepts the restoration instruction.

The microwave communication equipment 10 according to the exemplary embodiment may include a microcomputer, and may be realized by causing a CPU to execute a control program stored in a ROM(Read Only Memory) or the like. The control program of the microwave communication equipment 10 according to the exemplary embodiment may be set up so as to cause a computer including the set value storage unit (storage unit 112) that stores therein the variable set value for communication control for the microwave communication equipment 10 to perform the function of: controlling wire communication with first another microwave communication equipment 10 in the microwave communication network 1 (control unit 110 and communication interface unit 102); controlling microwave wireless communication with second another microwave communication equipment 10 in the microwave communication network 1 (control unit 110 and wireless communication control unit 108); accepting a modification instruction of the set value for communication control (NMS interface unit 114 and control unit 110); modifying the set value for communication control in the set value storage unit according to the modification instruction (modification unit 120); and controlling the communication according the set value for communication control in the set value storage unit (storage unit 112) (control unit 110, data processing unit 104, modem 106, and wireless communication control unit 108).

To be more detailed, the microwave communication equipment 10 includes the communication interface unit (communication I/F) 102, the data processing unit 104, the modem 106, the wireless communication control unit 108, the control unit 110, the storage unit 112, the NMS interface unit (NMS I/F) 114, a terminal interface unit (terminal I/F) 116, and the modification unit 120.

The communication interface unit 102 serves for mutual connection of one of the microwave communication equipments 10 with another opposing microwave communication equipment 10, such as the microwave communication equipment 10 marked as No.2 and the one marked as No.3 in Fig. 1, to thereby make communication. The communication interface unit 102 may be a PDH (Pre synchronous Digital Hierarchy) interface, a SDH (Synchronous Digital Hierarchy) interface, or a LAN(Local Area Network) interface, for example. Signals to be communicated between the communication interface units 102 of the opposing microwave communication equipments 10 may include a main signal and an auxiliary signal.

The data processing unit 104 processes a signal communicated with another microwave communication equipment 10 via the communication interface unit 102, and delivers the processed signal to the modem 106 and the control unit 110. The data processing unit 104 may be materialized by a digital processor unit (DPU) or the like, and modifies the transmission rate according to the number of inputs/outputs through the communication interface unit 102.

The modem 106 modulates a signal input by the data processing unit 104, and delivers the modulated signal to the wireless communication control unit 108, and also demodulates a signal input by the wireless communication control unit 108, and delivers the demodulated signal to the data processing unit 104. The modulation system may be controlled and modified by the control unit 110, according to an instruction from the network monitoring equipment 30, which will be referred to later. Examples of the modulation system include, for example, 4PSK, 16QAM, 32QAM, and 128QAM. The wireless communication control unit 108 performs microwave wireless communication with another microwave communication equipment 10 via the antenna 12. The control unit 110 controls each element of the microwave communication equipment 10, as well as the entirety thereof.

The storage unit 112 stores therein the set value for communication control, and the control program that controls the microwave communication equipment 10. The control unit 110 executes the control program stored in the storage unit 112, thereby controlling the entire equipment. The control unit 110 further controls the action of the data processing unit 104, the modem 106, and the wireless communication control unit 108 according to the set value for communication control, thereby controlling the communication. The control program and the set value for communication control stored in the storage unit 112 may be downloaded from the network monitoring equipment 30 for example, via the NMS interface unit 114, so as to upgrade the control program, or update or set the set value for communication control.

The NMS interface unit 114 makes communication with the network monitoring equipment 30. Examples of the NMS interface unit 114 include a USB or a LAN. The terminal interface unit 116 makes communication with the terminal device 40. Although the microwave communication equipment 10 includes both of the NMS interface unit 114 and the terminal interface unit 116 in the exemplary embodiment, the present invention is not limited to such structure. The microwave communication equipment 10 may solely include the NMS interface unit 114, such that the NMS interface unit 114 is also connected to the terminal device 40.

The modification unit 120 receives via the control unit 110 the set value for communication control set by the network monitoring equipment 30, to be described later, through the NMS interface unit 114 or the communication interface unit 102, and modifies the set value for communication control stored in the storage unit 112 to the received value. Also, the modification unit 120 may update the control program stored in the storage unit 112 based on the upgraded version of the control program downloaded from the network monitoring equipment 30. The modification unit 120 also takes, when modifying the set value for communication control, the backup of the original set value for communication control, so as to restore the modified set value for communication control to the backed-up value, when requested by the network monitoring equipment 30.

Fig. 3 is a functional block diagram showing a configuration of the network monitoring equipment 30 according to the exemplary embodiment. The network monitoring equipment 30 according to the exemplary embodiment includes an acceptance unit 208 that accepts, when upgrading the microwave communication equipment 10 of a predetermined section, the modification of the set value for communication control for the relevant microwave communication equipment 10, an update unit (equipment control unit 210) that upgrades the microwave communication equipment 10 according to the modification of the set value for communication control accepted by the acceptance unit 208, a measurement unit (data collection unit 220 and analysis unit 224) that measures transmission quality of the upgraded microwave communication network 1 of the microwave communication equipment 10, and a presentation unit (display control unit 228 and monitor 34) that presents the transmission quality measured by the measurement unit.

The network monitoring equipment 30 may further include a first restoration instruction acceptance unit (acceptance unit 208) that accepts an instruction to restore the set value for communication control before the modification, and a restoration instruction unit (equipment control unit 210) that instructs the microwave communication equipment 10, once the restoration instruction is accepted, to restore the set value for communication control to the value before the modification.

The network monitoring equipment 30 may be realized by executing the network monitoring program installed in the computer. The network monitoring program according to the exemplary embodiment serves to monitor and control a microwave wireless communication network 1 including a plurality of microwave communication equipments 10 linked at an end via wire communication and at the other end via microwave wireless communication, by causing the computer (network monitoring equipment 30) to perform function of: accepting, when the microwave communication equipment 10 of a predetermined section is to be upgraded (acceptance unit 208), modification of the set value for communication control for the microwave communication equipment 10; upgrading the microwave communication equipment 10 according to the modification of the set value for communication control accepted by the accepting (equipment control unit 210); measuring transmission quality of the microwave communication network 1 that has been upgraded(data collection unit 220 and analysis unit 224); and presenting the transmission quality measured by the measuring(display control unit 228).

To be more detailed, the network monitoring equipment 30 includes an interface unit (I/F) 202, a download (DL) unit 204, the acceptance unit 208, the equipment control unit 210, the data collection unit 220, a monitored data storage unit (marked as "monitored data" in Fig. 3) 222, the analysis unit 224, an analysis result storage unit (marked as "analysis result" in Fig. 3) 226, and the display control unit 228.

The interface unit 202 executes communication with the microwave communication equipment 10. The network monitoring equipment 30 and the microwave communication equipment 10 may be connected, for example, via a USB cable.

The download unit 204 downloads, from the microwave communication equipment 10 via the interface unit 202, a setting screen used for setting the variable set value for communication control for the microwave communication equipment 10. More specifically, the operator 5 requests the upgrading of the microwave communication equipment 10 of a predetermined section, by manipulating the operation unit 32. The designation of the predetermined section is accepted by the acceptance unit 208 to be described later, so that the acceptance unit 208 notifies the download unit 204 of the designation. The download unit 204 downloads, upon accepting the upgrading request, the setting screen from the microwave communication equipment 10 of the predetermined section via the interface unit 202, and displays the setting screen on the monitor 34.

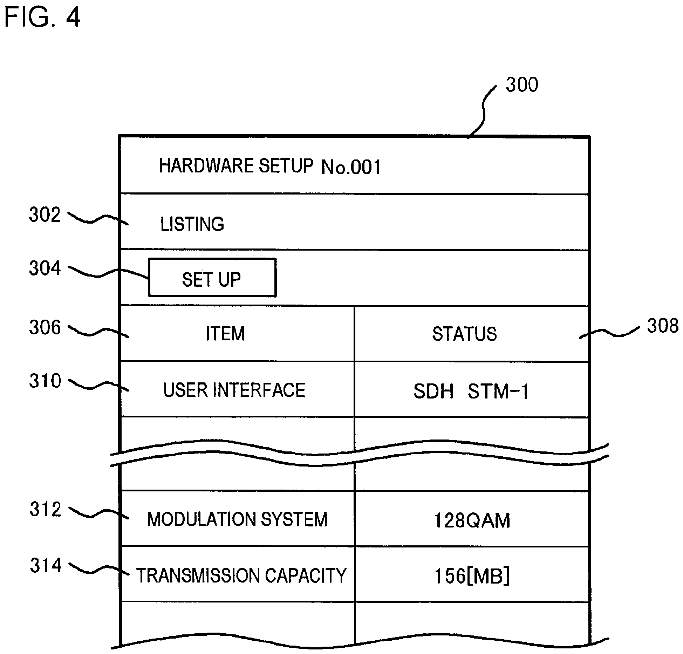

Fig. 4 depicts an example of the setting screen. An hardware setup screen 300 includes a setting listing 302 and a set button (marked as "set up" in Fig. 4) 304. The setting listing 302 contains statuses 308 corresponding to a plurality of items 306, and the screen turns into a modification screen (not shown) of the status 308 with respect to each of the items 306, upon selection by the operator 5 by, for example, double-clicking the set button 304 via the operation unit 32.

The items 306 may include, for example, a user interface 310, a modulation system 312, and a transmission capacity 314. Fig. 4 shows a sample screen in which "SDH STM-1" is selected as the user interface 310, "128QAM" system as the modulation system 312, and "156 (MB)" as the transmission capacity 314.

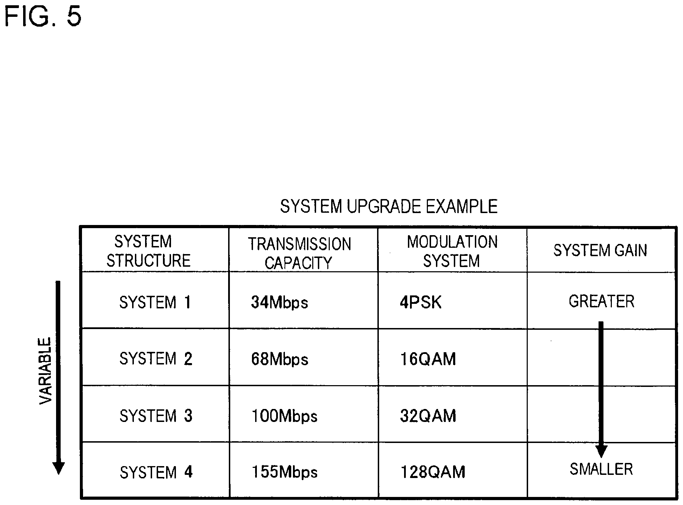

The term of "upgrade" herein means, as shown in Fig. 5, modifying the specification of a system 1 to that of a system 2, system 3, or to a system 4, for example increasing the transmission capacity and modifying the modulation system.

Referring back to Fig. 3, the acceptance unit 208 accepts designation of which section corresponding to the microwave communication equipment 10 to be modified, among the plurality of microwave communication equipments 10 forming the microwave communication network 1. To be more detailed, the acceptance unit 208 accepts the section designated by the operator 5 via manipulation of the operation unit 32, and delivers the designation to the download unit 204 and the equipment control unit 210. The acceptance unit 208 further accepts various set values designated in the setting screen downloaded by the download unit 204 and displayed on the monitor 34. As described above, the acceptance unit 208 may accept the designation of, for example, the user interface 310, the modulation system 312, and the transmission capacity 314. The acceptance unit 208 also accepts from the operator 5 the restoration instruction of the backed-up set value for the microwave communication equipment 10, and notifies the equipment control unit 210 of the restoration instruction.

The equipment control unit 210 controls, via the interface unit 202, the relevant microwave communication equipment 10 of the section in the microwave communication network 1 accepted by the acceptance unit 208, so as to modify the set value accepted by the acceptance unit 208. The equipment control unit 210 also controls the microwave communication equipment 10 so as to restore the backed-up set value, accepted by the acceptance unit 208. The microwave communication equipment 10 restores the original set value backed up when the set value was modified, in response to the restoration instruction from the network monitoring equipment 30.

The data collection unit 220 collects data for monitoring the microwave communication equipment 10, via the interface unit 202. Here, a data format received from the microwave communication equipment 10 may be configured such that a main signal (payload) corresponds to a designated transmission rate (number of inputs and outputs), and auxiliary signals follow. The auxiliary signals may include, for example, an error correction signal and an additional control signal used for the control between the microwave communication equipment 10 and the network monitoring equipment 30. The additional control signal may indicate which of the microwave communication equipments 10 is to be controlled, which of the set values is to be modified, and the modified set value itself.

The monitored data storage unit 222 stores therein the monitored data collected by the data collection unit 220. Items to be monitored include, for example, a signal error, hardware malfunction, received field, transmission power, various setting information such as frequency, transmission capacity, and modulation system. The monitored data storage unit 222 also stores a history of the monitored data collected by the data collection unit 220 in a predetermined period. The analysis unit 224 analyzes the transmission quality based on the monitored data stored in the monitored data storage unit 222. The analysis result storage unit 226 stores therein the analysis result provided by the analysis unit 224.

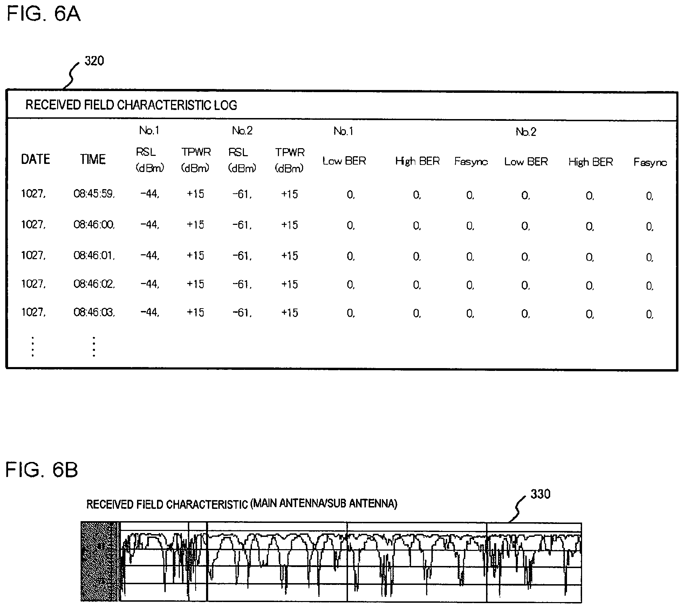

The display control unit 228 accepts an instruction of the operator 5 via the operation unit 32, to thereby cause the monitor 34 to display a screen showing the designated analysis result. The display control unit 228 displays a screen showing the analysis result, based on the data stored in the monitored data storage unit 222 and the analysis result storage unit 226. For example, the display control unit 228 may display a received field characteristic log screen 320 shown in Fig. 6A. The received field characteristic log screen 320 contains a listing showing a history of the received field characteristic of each of the microwave communication equipments 10 No.1 and No.2 of the designated section, collected every second. Another example is shown in Fig. 6B, which represents a received field characteristic graph screen 330. The received field characteristic graph screen 330 indicates the history of the received field characteristic log screen 320 in a graph format, with the horizontal axis representing the elapsed time.

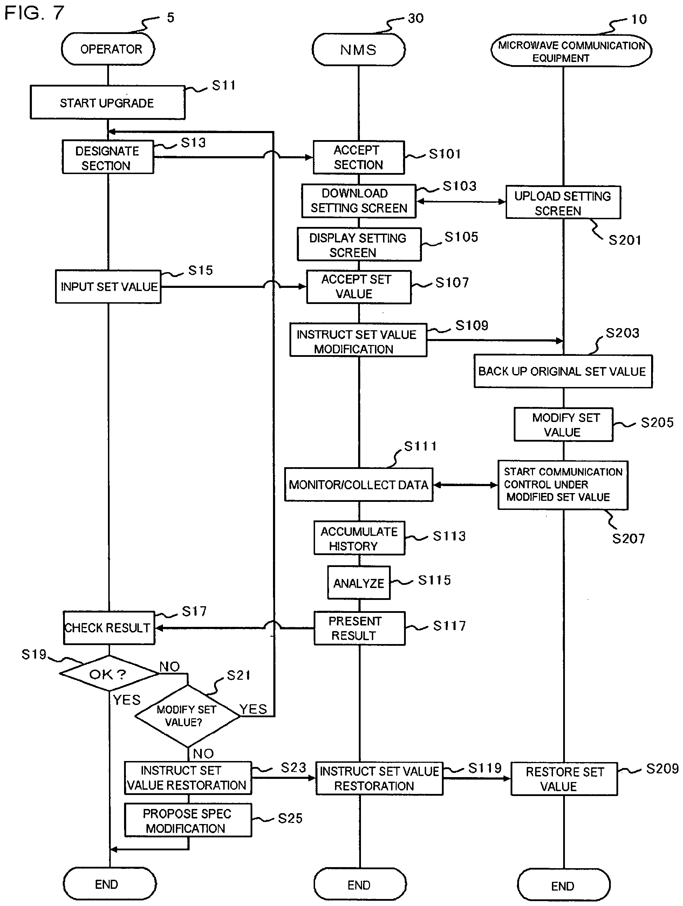

An operation of the microwave wireless communication system thus configured will be described hereunder. Fig. 7 is a flowchart showing an example of the upgrading process of the microwave wireless communication system according to the exemplary embodiment, and of the operation of the respective equipments during the process. Figs. 1 through 7 will be referred to for the description.

Firstly, the operator 5 starts to upgrade the microwave communication equipment 10 of a predetermined section in the microwave communication network 1, through the network monitoring equipment 30 (step S11). The operator 5 manipulates the operation unit 32 of the network monitoring equipment 30, to thereby designate the section to be upgraded (step S13). In the network monitoring equipment 30, the acceptance unit 208 accepts the section designated by the operator 5 (step S101). In the network monitoring equipment 30, the download unit 204 applies for downloading the hardware setup screen 300, to the microwave communication equipment 10 of the predetermined section (step S103), so that the microwave communication equipment 10 uploads the hardware setup screen 300, in compliance with the request from the network monitoring equipment 30 (step S201).

In the network monitoring equipment 30, the hardware setup screen 300 shown in Fig. 4 is displayed on the monitor 34 (step S105). The operator 5 then presses the set button 304 on the hardware setup screen 300 so as to turn the screen into the setting screen, and inputs the set value via the operation unit 32 (step S15). In the network monitoring equipment 30, the acceptance unit 208 accepts the set value thus input (step S107). The equipment control unit 210 controls, via the interface unit 202, the microwave communication equipment 10 of the section accepted by the acceptance unit 208 so as to modify the set value accepted by the acceptance unit 208 (step S109). For example, the additional data control signal may carry the modification instruction of the set value.

The microwave communication equipment 10 backs up, once the control unit 110 receives the set value modification instruction from the network monitoring equipment 30 via the NMS interface unit 114, the original set value initially stored in the storage unit 112 (step S203). As will be subsequently described, a purpose of taking the backup is to restore the original set value in case of need, depending on the analysis result upon analyzing the transmission quality based on the tentatively modified set value.

Then the control unit 110 updates the set value stored in the storage unit 112, to the new set value received via the terminal interface unit 116 (step S205). As an example, it will be assumed that the setting as the system 1 shown in Fig. 5 for the microwave communication equipment 10 is to be upgraded to the setting as the system 2. More specifically, the transmission capacity is to be modified from 34 Mbps to 68 Mbps, and the modulation system from 4PSK to 16QAM. The control unit 110 then starts to control the modem 106 based on the updated setting stored in the storage unit 112, i.e. the transmission capacity of 68 Mbps and the modulation system of 16QAM, thereby starting the communication with the relevant microwave communication equipment 10 via the wireless communication control unit 108 (step S207).

Once the communication control for the microwave communication equipment 10 is started, the data collection unit 220 starts collecting the monitored data so as to monitor the transmission quality, in the network monitoring equipment 30 (step S111). The monitored data collected by the data collection unit 220 is sequentially stored in the monitored data storage unit 222, and accumulated therein (step S113). Then the analysis unit 224 analyzes the transmission quality based on the monitored data accumulated in the monitored data storage unit 222 (step S115). The analysis result is stored in the analysis result storage unit 226. The display control unit 228 causes the monitor 34 to display the history information accumulated in the monitored data storage unit 222 and the analysis result stored in the analysis result storage unit 226, for example in the form of the received field characteristic log screen 320 shown in Fig. 6A (step S117). The history information and the analysis result may also be printed out by the printer 36.

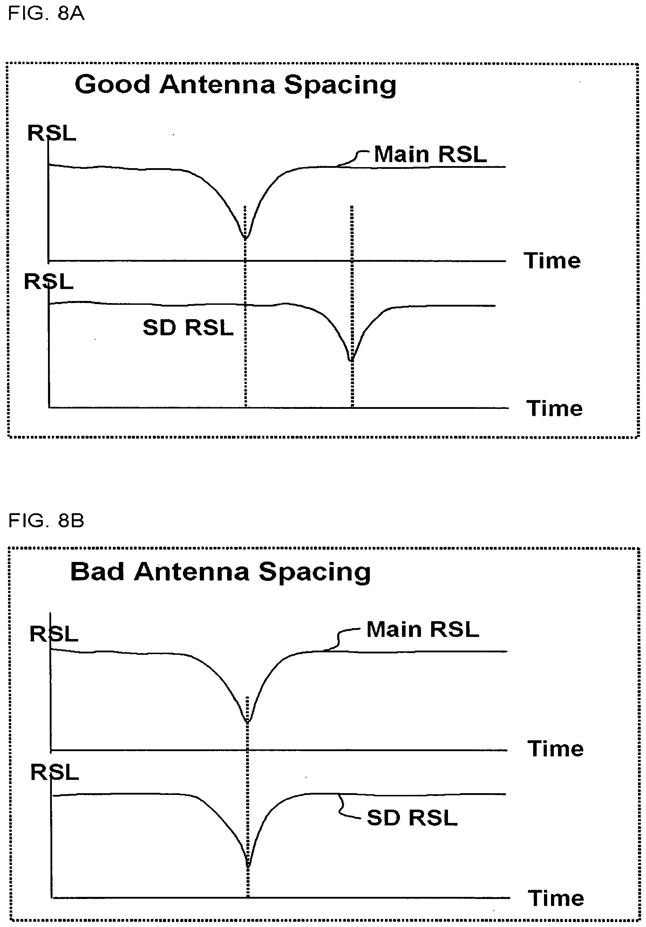

The operator 5 checks whether the transmission quality satisfies a predetermined quality, based on the analysis result and the history information displayed (step S17). It is now assumed that the upgrading is addition of space diversity for example. As shown in Fig. 8A, in the case where the received field characteristic (RSL) is lowered at different positions between the main system and the space diversity (SD) system, the main system and the SD system can be construed as being mutually complementary, and hence under a desirable state. On the other hand, in the case where the RSL is lowered at the same position in both of the main system and the SD system as shown in Fig. 8B, it is concluded that the state is undesirable.

Referring back to Fig. 7, if the transmission quality is satisfactory (YES at step S19), the process is completed. If the transmission quality is undesirable (NO at step S19), the operator 5 decides whether there is a need for modification of the set value or not(step S21), and if the modification is to be made (YES at step S21), the process returns to the step S13, so that the network monitoring equipment 30 enters a standby state pending the section designation by the operator 5. Here, the operator 5 may judge the transmission quality and input the result via the operation unit 32. Alternatively, the analysis unit 224 may compare the quality data with a predetermined threshold value to thereby decide whether the transmission quality is within the permissible range, and display the result on the monitor 34.

On the other hand, in the case where the tentative modification has to be cancelled (NO at step S21), the operator 5 issues the restoration instruction of the backed-up set value via the operation unit 32 (step S23), so that the acceptance unit 208 in the network monitoring equipment 30 accepts the restoration instruction, and the equipment control unit 210 gives the restoration instruction of the set value to the relevant microwave communication equipment 10 via the interface unit 202 (step S119). In the relevant microwave communication equipment 10, the control unit 110 accepts the restoration instruction via the NMS interface unit 114, and makes the modification unit 120 restore the set value in the storage unit 112 (step S209).

It is to be noted that, whenever necessary, the history of the measurement result of the transmission quality of the microwave communication network 1, provided by the network monitoring equipment 30 for a predetermined period under the tentatively modified set values may be accumulated in the monitored data storage unit 222. Such history allows checking the transmission quality of the predetermined period, thereby enabling checking the transmission quality according to fluctuation in environment, such as weather or radiowave condition, which leads to higher reliability of the system. Thus, the assurance that the desired transmission quality will be constantly achieved can be obtained, before actually performing the upgrading of the system.

As described above, the microwave wireless communication system according to the exemplary embodiment of the present invention allows tentatively modifying the set value of the microwave communication equipment of a certain section and thereby measuring the transmission quality of the network and checking the result. The microwave wireless communication system, therefore, enables estimating in advance degradation of the transmission quality originating from the modification of the set value, for example the transmission capacity and the modulation system, and thus performing appropriate system modification. Besides, the set values may be further modified according to the presented result, so that the system may be modified to a higher level.

The microwave wireless communication system according to the present invention also allows restoring the set value, in case where the transmission quality proves to exceed a permissible range after the tentative modification, to the value before the modification, thereby restoring the orginal transmission quality. Such configuration enables improving the work efficiency for upgrading without the need to replace the hardware such as an antenna, thereby saving the cost of such unnecessary hardware.

It is apparent that the present invention is not limited to the above embodiment, and may be modified and changed without departing from the scope of the invention.

## Claims

1. A microwave wireless communication system, comprising:
a plurality of microwave communication equipments (10) linked at one end via wire communication and at the other end via microwave wireless communication; and
a network monitoring equipment (30) that monitors and controls a microwave communication network including said plurality of microwave communication equipments;
wherein said network monitoring equipment comprises:
an acceptance means (208) for accepting from an operation unit (32) that is operated by an operator (5), when a microwave communication equipment of a predetermined section is to be upgraded, modification of a set value for communication control for said microwave communication equipment;
an update means (210) for upgrading said microwave communication equipment according to said modification of said set value for communication control accepted by said acceptance means;
a measurement means (220, 224) for measuring transmission quality of said microwave communication network of said microwave communication equipment that has been upgraded; and
a presentation means (228, 34) for presenting said transmission quality measured by said measurement means;
and wherein said microwave communication equipment comprises:
a wire communication interface means (102) for making wire communication with first another microwave communication equipment in said microwave communication network;
a wireless communication means (108) for making microwave wireless communication with second another microwave communication equipment in said microwave communication network;
a set value storage means (112) for storing therein a variable set value for communication control;
a modification acceptance means (110, 114) for accepting a modification instruction of said set value for communication control from said network monitoring equipment;
a modification means (120) for modifying said set value for communication control in said set value storage means according to said modification instruction; and
a control means (110) for controlling communication according to said set value for communication control in said set value storage means;
wherein said network monitoring equipment further comprises:
a first restoration instruction acceptance means (208) for accepting an instruction to restore said set value for communication control before said modification; and
a restoration instruction means (210) for instructing, once said restoration instruction is accepted, said microwave communication equipment to restore said set value for communication control to said value before said modification; and
said microwave communication equipment further comprises:
a backup means (120) for backing up said set value for communication control in said set value storage means when said modification acceptance means accepts said modification instruction;
a second restoration instruction acceptance means (114, 110) for accepting said restoration instruction from said network monitoring equipment; and
a restoration means (120) for restoring said set value for communication control backed up by said backup means in said set value storage means, when said second restoration instruction acceptance means accepts said restoration instruction.

2. The microwave wireless communication system according to claim 1, wherein said set value for communication control includes at least one of set value of a transmission capacity and a type of modulation system.

3. The microwave wireless communication system according to claim 1 or 2, further comprising a history accumulation means (222) for causing said measurement means of said network monitoring equipment to measure said transmission quality for a predetermined period, and accumulates therein a history of said transmission quality that has been measured;
wherein said presentation means further presents said history.

4. A microwave communication network monitoring equipment that monitors and controls a microwave communication network including a plurality of microwave communication equipments (10) linked at one end via wire communication and at the other end via microwave wireless communication, comprising:
an acceptance means (208) for accepting from an operation unit (32) that is operated by an operator (5), when a microwave communication equipment of a predetermined section is to be upgraded, modification of a set value for communication control for said microwave communication equipment;
an update means (210) for upgrading said microwave communication equipment according to said modification of said set value for communication control accepted by said acceptance means;
a measurement means (220, 224) for measuring transmission quality of said microwave communication network of said microwave communication equipment that has been upgraded; and
a presentation means (228, 34) for presenting said transmission quality measured by said measurement means;
a first restoration instruction acceptance means (208) for accepting an instruction to restore said set value for communication control before said modification; and
a restoration instruction means (210) for instructing, once said restoration instruction is accepted, said microwave communication equipment to restore said set value for communication control to said value before said modification.

5. A network monitoring program that monitors and controls a microwave wireless communication network including a plurality of microwave communication equipments linked at one end via wire communication and at the other end via microwave wireless communication, causing a computer at a network monitoring equipment to execute functions including:
accepting from an operation unit that is operated by an operator, when a microwave communication equipment of a predetermined section is to be upgraded, modification of a set value for communication control for said microwave communication equipment;
upgrading said microwave communication equipment according to said modification of said set value for communication control accepted by said accepting;
measuring transmission quality of said microwave communication network that has been upgraded; and
presenting said transmission quality measured by said measuring;
the program further causing a computer at a microwave communication equipment to execute functions including:
making wire communication with first another microwave communication equipment in said microwave communication network;
making microwave wireless communication with second another microwave communication equipment in said microwave communication network;
storing in a set value storage means (112) a variable set value for communication control;
accepting a modification instruction of said set value for communication control from said network monitoring equipment;
modifying said set value for communication control in said set value storage means (112) according to said modification instruction; and
controlling communication according to said set value for communication control in said set value storage means (112);
the program further causing the computer at the network monitoring equipment to execute functions including:
accepting an instruction to restore said set value for communication control before said modification; and
instructing, once said restoration instruction is accepted, said microwave communication equipment to restore said set value for communication control to said value before said modification;
the program further causing the computer at the microwave communication equipment to execute functions including:
backing up said set value for communication control in said set value storage means (112) when said modification instruction is accepted;
accepting said restoration instruction from said network monitoring equipment; and
restoring said backed-up set value for communication control in said set value storage means (122), when said restoration instruction is accepted.

## Patentansprüche

1. Drahtloses Mikrowellenkommunikationssystem, das Folgendes umfasst:
mehrere Mikrowellenkommunikationseinrichtungen (10), die an einem Ende über Drahtkommunikation und am anderen Ende über drahtlose Mikrowellenkommunikation verknüpft sind; und
eine Netzwerküberwachungseinrichtung (30), die ein Mikrowellenkommunikationsnetz einschließlich der genannten mehreren Mikrowellenkommunikationseinrichtungen überwacht und steuert;
wobei die genannte Netzwerküberwachungseinrichtung Folgendes umfasst:
ein Akzeptiermittel (208), um von einer von einem Bediener (5) bedienten Betriebseinheit (32), wenn eine Mikrowellenkommunikationseinrichtung eines vorbestimmten Teils upgradet werden soll, eine Änderung eines Sollwertes für Kommunikationssteuerung für die genannte Mikrowellenkommunikationseinrichtung zu akzeptieren;
ein Update-Mittel (210) zum Upgraden der genannten Mikrowellenkommunikationseinrichtung gemäß der von dem genannten Akzeptiermittel akzeptierten genannten Änderung des genannten Sollwerts für Kommunikationssteuerung;
ein Messmittel (220, 224) zum Messen der Übertragungsqualität des genannten Mikrowellenkommunikationsnetzes der upgradeten genannten Mikrowellenkommunikationseinrichtung; und
ein Präsentationsmittel (228, 34) zum Präsentieren der genannten von dem genannten Messmittel gemessenen Übertragungsqualität;
und wobei die genannte Mikrowellenkommunikationseinrichtung Folgendes umfasst:
eine Drahtkommunikationsschnittstelle (102) zum Durchführen von Drahtkommunikation mit einer ersten anderen Mikrowellenkommunikationseinrichtung in dem genannten Mikrowellenkommunikationsnetz;
ein drahtloses Kommunikationsmittel (108) zur Durchführung von drahtloser Mikrowellenkommunikation mit einer zweiten anderen Mikrowellenkommunikationseinrichtung in dem genannten Mikrowellenkommunikationsnetz;
ein Sollwertspeichermittel (112) zum Speichern eines variablen Sollwertes für Kommunikationssteuerung darin;
ein Änderungakzeptiermittel (110, 114) zum Akzeptieren einer Änderungsanweisung des genannten Sollwertes für Kommunikationssteuerung von der genannten Netzwerküberwachungseinrichtung;
ein Änderungsmittel (120) zum Ändern des genannten Sollwertes für Kommunikationssteuerung in dem genannten Sollwertspeichermittel gemäß der genannten Änderungsanweisung; und
ein Steuermittel (110) zum Steuern von Kommunikation gemäß dem genannten Sollwert für Kommunikationssteuerung in dem genannten Sollwertspeichermittel;
wobei die genannte Netzwerküberwachungseinrichtung ferner Folgendes umfasst:
ein erstes Wiederherstellungsanweisung-Akzeptiermittel (208) zum Akzeptieren einer Anweisung zum Wiederherstellen des genannten Sollwertes für Kommunikationssteuerung vor der genannten Änderung; und
ein Wiederherstellungsanweisungsmittel (210) zum Anweisen, nach dem Akzeptieren der genannten Wiederherstellungsanweisung, der genannten Mikrowellenkommunikationseinrichtung zum Wiederherstellen des genannten Sollwerts für Kommunikationssteuerung auf den genannten Wert vor der genannten Änderung; und
wobei die genannte Mikrowellenkommunikationseinrichtung ferner Folgendes umfasst:
ein Sicherungsmittel (120) zum Sichern des genannten Sollwerts für Kommunikationssteuerung in dem genannten Sollwertspeichermittel, wenn das genannte Änderungsakzeptiermittel die genannte Änderungsanweisung akzeptiert;
ein zweites Wiederherstellungsanweisung-Akzeptiermittel (114, 110) zum Akzeptieren der genannten Wiederherstellungsanweisung von der genannten Netzwerküberwachungseinrichtung; und
ein Wiederherstellungsmittel (120) zum Wiederherstellen des von dem genannten Sicherungsmittel in dem genannten Sollwertspeichermittel gesicherten genannten Sollwerts für Kommunikationssteuerung, wenn das genannte zweite Wiederherstellungsanweisung-Akzeptiermittel die genannte Wiederherstellungsanweisung akzeptiert.

2. Drahtloses Mikrowellenkommunikationssystem nach Anspruch 1, wobei der genannte Sollwert für Kommunikationssteuerung einen Sollwert für eine Übertragungskapazität und/oder einen Modulationssystemtyp beinhaltet.

3. Drahtloses Mikrowellenkommunikationssystem nach Anspruch 1 oder 2, das ferner ein Historienakkumulationsmittel (222) umfasst, um zu bewirken, dass das genannte Messmittel der genannten Netzwerküberwachungseinrichtung die genannte Übertragungsqualität für eine vorbestimmte Periode misst und darin eine Historie der genannten gemessen Übertragungsqualität akkumuliert;
wobei das genannte Präsentationsmittel ferner die genannte Historie präsentiert.

4. Mikrowellenkommunikationsnetz-Überwachungseinrichtung, die ein Mikrowellenkommunikationsnetz mit mehreren Mikrowellenkommunikationseinrichtungen (10) überwacht und steuert, die an einem Ende über Drahtkommunikation und am anderen Ende über drahtlose Mikrowellenkommunikation verknüpft sind, das Folgendes umfasst:
ein Akzeptiermittel (208) zum Akzeptieren, von einer von einem Bediener (5) bedienten Betriebseinheit (32), wenn eine Mikrowellenkommunikationseinrichtung eines vorbestimmten Teils upgradet werden soll, einer Änderung eines Sollwertes für Kommunikationssteuerung für die genannte Mikrowellenkommunikationseinrichtung;
ein Update-Mittel (210) zum Upgraden der genannten Mikrowellenkommunikationseinrichtung gemäß der durch das genannte Akzeptiermittel akzeptierten genannten Änderung des genannten Sollwerts für Kommunikationssteuerung;
ein Messmittel (220, 224) zum Messen der Übertragungsqualität des genannten Mikrowellenkommunikationsnetzes der upgradeten genannten Mikrowellenkommunikationseinrichtung; und
ein Präsentationsmittel (228, 34) zum Präsentieren der von dem genannten Messmittel gemessenen genannten Übertragungsqualität;
ein erstes Wiederherstellungsanweisung-Akzeptiermittel (208) zum Akzeptieren einer Anweisung zum Wiederherstellen des genannten Sollwertes für Kommunikationssteuerung vor der genannten Änderung; und
ein Wiederherstellungsanweisungsmittel (210) zum Anweisen, nach dem Akzeptieren der genannten Wiederherstellungsanweisung, der genannten Mikrowellenkommunikationseinrichtung zum Wiederherstellen des genannten Sollwertes für Kommunikationssteuerung auf den genannten Wert vor der genannten Änderung.

5. Netzwerküberwachungsprogramm, das ein drahtloses Mikrowellenkommunikationsnetz mit mehreren Mikrowellenkommunikationseinrichtungen überwacht und steuert, die an einem Ende über Drahtkommunikation und am anderen Ende über drahtlose Mikrowellenkommunikation verknüpft sind, durch Bewirken, dass ein Computer an einer Netzwerküberwachungseinrichtung die folgenden Funktionen ausführt:
Akzeptieren, von einer von einem Bediener bedienten Betriebseinheit, wenn eine Mikrowellenkommunikationseinrichtung eines vorbestimmten Teils upgradet werden soll, einer Änderung eines Sollwerts für Kommunikationssteuerung für die genannte Mikrowellenkommunikationseinrichtung;
Upgraden der genannten Mikrowellenkommunikationseinrichtung gemäß der von dem genannten Akzeptiermittel akzeptierten genannten Änderung des genannten Sollwerts für Kommunikationssteuerung;
Messen der Übertragungsqualität der upgradeten genannten Mikrowellenkommunikationseinrichtung; und
Präsentieren der genannten von dem genannten Messmittel gemessenen Übertragungsqualität;
wobei das Programm ferner bewirkt, dass ein Computer an einer Mikrowellenkommunikationseinrichtung die folgenden Funktionen ausführt:
Durchführen von Drahtkommunikation mit einer ersten anderen Mikrowellenkommunikationseinrichtung in dem genannten Mikrowellenkommunikationsnetz;
Durchführen von drahtloser Mikrowellenkommunikation mit einer zweiten anderen Mikrowellenkommunikationseinrichtung in dem genannten Mikrowellenkommunikationsnetz;
Speichern, in einem Sollwertspeichermittel (112), eines variablen Sollwertes für Kommunikationssteuerung;
Akzeptieren einer Änderungsanweisung des genannten Sollwertes für Kommunikationssteuerung von der genannten Netzwerküberwachungseinrichtung;
Ändern des genannten Sollwertes für Kommunikationssteuerung in dem genannten Sollwertspeichermittel (112) gemäß der genannten Änderungsanweisung; und
Steuern von Kommunikation gemäß dem genannten Sollwert für Kommunikationssteuerung in dem genannten Sollwertspeichermittel (112);
wobei das Programm ferner bewirkt, dass der Computer an der Netzwerküberwachungseinrichtung die folgenden Funktionen ausführt:
Akzeptieren einer Anweisung zum Wiederherstellen des genannten Sollwertes für Kommunikationssteuerung vor der genannten Änderung; und
Anweisen, nach dem Akzeptieren der genannten Wiederherstellungsanweisung, der genannten Mikrowellenkommunikationseinrichtung zum Wiederherstellen des genannten Sollwerts für Kommunikationssteuerung auf den genannten Wert vor der genannten Änderung;
wobei das Programm ferner bewirkt, dass der Computer an der Mikrowellenkommunikationseinrichtung die folgenden Funktionen ausführt:
Sichern des genannten Sollwertes für Kommunikationssteuerung in dem genannten Sollwertspeichermittel (112), wenn die genannte Änderungsanweisung akzeptiert wird;
Akzeptieren der genannten Wiederherstellungsanweisung von der genannten Netzwerküberwachungseinrichtung; und
Wiederherstellen des genannten gesicherten Sollwertes für Kommunikationssteuerung in dem genannten Sollwertspeichermittel (122), wenn die genannte Wiederherstellungsanweisung akzeptiert wird.

## Revendications

1. Système de communication sans fil micro-ondes, comprenant :
une pluralité d'équipements de communication micro-ondes (10) reliés à une extrémité par communication câblée et à l'autre extrémité par communication sans fil micro-ondes ; et
un équipement de surveillance réseau (30) qui surveille et contrôle un réseau de communication micro-ondes comprenant ladite pluralité d'équipements de communication micro-ondes ;
où ledit équipement de surveillance réseau comprend :
un moyen d'acceptation (208) pour accepter d'une unité d'opération (32) qui est actionnée par un opérateur (5), lorsqu'un équipement de communication micro-ondes d'une section prédéterminée doit être mis à niveau, une modification d'une valeur de consigne pour le contrôle de communication pour ledit équipement de communication micro-ondes ;
un moyen de mise à niveau (210) pour mettre à niveau ledit équipement de communication micro-ondes conformément à ladite modification de ladite valeur de consigne pour le contrôle de communication, acceptée par ledit moyen d'acceptation ;
un moyen de mesure (220, 224) pour mesurer la qualité de transmission dudit réseau de communication micro-ondes dudit équipement de communication micro-ondes qui a été mis à niveau ; et
un moyen de présentation (228, 34) pour présenter ladite qualité de transmission mesurée par ledit moyen de mesure ;
et où ledit équipement de communication micro-ondes comprend :
un moyen d'interface de communication câblée (102) pour établir une communication câblée avec un premier autre équipement de communication micro-ondes dans ledit réseau de communication micro-ondes ;
un moyen de communication sans fil (108) pour établir une communication sans fil micro-ondes avec un deuxième autre équipement de communication micro-ondes dans ledit réseau de communication micro-ondes ;
un moyen de stockage de valeur de consigne (112) pour stocker dedans une valeur de consigne variable pour le contrôle de communication ;
un moyen d'acceptation de modification (110, 114) pour accepter une instruction de modification de ladite valeur de consigne pour le contrôle de communication dudit équipement de surveillance réseau ;
un moyen de modification (120) pour modifier ladite valeur de consigne pour le contrôle de communication dans ledit moyen de stockage de valeur de consigne conformément à ladite instruction de modification ; et
un moyen de contrôle (110) pour contrôler la communication conformément à ladite valeur de consigne pour le contrôle de communication dans ledit moyen de stockage de valeur de consigne ;
où ledit équipement de surveillance réseau comprend en outre :
un premier moyen d'acceptation d'instruction de rétablissement (208) pour accepter une instruction de rétablissement de ladite valeur de consigne pour le contrôle de communication avant ladite modification ; et
un moyen d'instruction de rétablissement (210) pour instruire, une fois que l'instruction de rétablissement a été acceptée, ledit équipement de communication micro-ondes de rétablir ladite valeur de consigne pour le contrôle de communication à ladite valeur avant ladite modification ; et
ledit équipement de communication micro-ondes comprend en outre :
un moyen de sauvegarde (120) pour sauvegarder ladite valeur de consigne pour le contrôle de communication dans ledit moyen de stockage de valeur de consigne lorsque ledit moyen d'acceptation de modification accepte ladite instruction de modification ;
un deuxième moyen d'acceptation d'instruction de rétablissement (114, 110) pour accepter ladite instruction de rétablissement dudit équipement de surveillance réseau ; et
un moyen de rétablissement (120) pour rétablir ladite valeur de consigne pour le contrôle de communication sauvegardée par ledit moyen de sauvegarde dans ledit moyen de stockage de valeur de consigne, lorsque ledit deuxième moyen d'acceptation d'instruction de rétablissement accepte ladite instruction de rétablissement.

2. Système de communication sans fil micro-ondes selon la revendication 1, dans lequel ladite valeur de consigne pour le contrôle de communication comprend au moins l'une d'entre une valeur de consigne d'une capacité de transmission et d'un type de système de modulation.

3. Système de communication sans fil micro-ondes selon la revendication 1 ou 2, comprenant en outre un moyen d'accumulation historique (222) pour faire que ledit moyen de mesure dudit équipement de surveillance réseau, mesure ladite qualité de transmission pendant une période prédéterminée, et accumule dedans un historique de ladite qualité de transmission qui a été mesurée ;
où ledit moyen de présentation présente en outre ledit historique.

4. Equipement de surveillance de réseau de communication micro-ondes qui surveille et contrôle un réseau de communication micro-ondes comprenant une pluralité d'équipements de communication micro-ondes (10) reliés à une extrémité par communication câblée et à l'autre extrémité par communication sans fil micro-ondes, comprenant :
un moyen d'acceptation (208) pour accepter d'une unité d'opération (32) qui est actionnée par un opérateur (5), lorsqu'un équipement de communication micro-ondes d'une section prédéterminée doit être mis à niveau, une modification d'une valeur de consigne pour le contrôle de communication pour ledit équipement de communication micro-ondes ;
un moyen de mise à niveau (210) pour mettre à niveau ledit équipement de communication micro-ondes conformément à ladite modification de ladite valeur de consigne pour le contrôle de communication, acceptée par ledit moyen d'acceptation ;
un moyen de mesure (220, 224) pour mesurer la qualité de transmission dudit réseau de communication micro-ondes dudit équipement de communication micro-ondes qui a été mis à niveau ; et
un moyen de présentation (228, 34) pour présenter ladite qualité de transmission mesurée par ledit moyen de mesure ;
un premier moyen d'acceptation d'instruction de rétablissement (208) pour accepter une instruction de rétablissement de ladite valeur de consigne pour le contrôle de communication avant ladite modification ; et
un moyen d'instruction de rétablissement (210) pour instruire, une fois que l'instruction de rétablissement a été acceptée, ledit équipement de communication micro-ondes de rétablir ladite valeur de consigne pour le contrôle de communication à ladite valeur avant ladite modification.

5. Programme de surveillance réseau qui surveille et contrôle un réseau de communication sans fil micro-ondes comprenant une pluralité d'équipements de communication micro-ondes reliés à une extrémité par communication câblée et à l'autre extrémité par communication sans fil micro-ondes, faisant qu'un ordinateur à un équipement de surveillance réseau exécute des fonctions comprenant :
accepter d'une unité d'opération qui est actionnée par un opérateur, lorsqu'un équipement de communication micro-ondes d'une section prédéterminée doit être mis à niveau, une modification d'une valeur de consigne pour le contrôle de communication pour ledit équipement de communication micro-ondes ;
mettre à niveau ledit équipement de communication micro-ondes conformément à ladite modification de ladite valeur de consigne pour le contrôle de communication acceptée par ledit moyen d'acceptation;
mesurer la qualité de transmission dudit réseau de communication micro-ondes dudit équipement de communication micro-ondes qui a été mis à niveau ; et
présenter ladite qualité de transmission mesurée par ledit moyen de mesure ; le programme faisant en outre qu'un ordinateur à un équipement de communication micro-ondes exécute des fonctions comprenant :
établir une communication câblée avec un premier autre équipement de communication micro-ondes dans ledit réseau de communication micro-ondes ;
établir une communication sans fil micro-ondes avec un deuxième autre équipement de communication micro-ondes dans ledit réseau de communication micro-ondes ;
stocker dans un moyen de stockage de valeur de consigne (112) une valeur de consigne variable pour le contrôle de communication ;
accepter une instruction de modification de ladite valeur de consigne pour le contrôle de communication dudit équipement de surveillance réseau ;
modifier ladite valeur de consigne pour le contrôle de communication dans ledit moyen de stockage de valeur de consigne (112) conformément à ladite instruction de modification ; et
contrôler la communication conformément à ladite valeur de consigne pour le contrôle de communication dans ledit moyen de stockage de valeur de consigne (112) ; le programme faisant en outre que l'ordinateur à l'équipement de surveillance réseau exécute des fonctions comprenant :
accepter une instruction de rétablissement de ladite valeur de consigne pour le contrôle de communication avant ladite modification ; et
instruire, une fois que l'instruction de rétablissement a été acceptée, ledit équipement de communication micro-ondes de rétablir ladite valeur de consigne pour le contrôle de communication à ladite valeur avant ladite modification ;
le programme faisant en outre que l'ordinateur à l'équipement de communication micro-ondes exécute des fonctions comprenant :
sauvegarder ladite valeur de consigne pour le contrôle de communication dans ledit moyen de stockage de valeur de consigne (112) lorsque ladite instruction de modification est acceptée ;
accepter ladite instruction de rétablissement dudit équipement de surveillance réseau ; et
rétablir ladite valeur de consigne sauvegardée pour le contrôle de communication dans ledit moyen de stockage de valeur de consigne (122), lorsque ladite instruction de rétablissement est acceptée.
